Europäisches Patentamt

European Patent Office

Office européen des brevets

(11) Veröffentlichungsnummer: **0 384 025**
**A2**

(12) **EUROPÄISCHE PATENTANMELDUNG**

(21) Anmeldenummer: **89123275.3**

(22) Anmeldetag: **15.12.89**

(51) Int. Cl.⁵: **H04M 3/64**

(30) Priorität: **21.02.89 DE 3905259**

(43) Veröffentlichungstag der Anmeldung:
**29.08.90 Patentblatt 90/35**

(84) Benannte Vertragsstaaten:
**AT BE CH DE ES FR GB IT LI NL SE**

(71) Anmelder: **TELENORMA Telefonbau und Normalzeit GmbH**
**Mainzer Landstrasse 128-146**
**D-6000 Frankfurt am Main(DE)**

(72) Erfinder: **Hutt, Hans-Ulrich**
**Adelberger Strasse 35**
**D-7336 Uhingen(DE)**
Erfinder: **Bühler, Udo**
**Am Kugelrain 24**
**D-7336 Uhinger(DE)**

(54) Verfahren zur Anrufbeantwortung in Kommunikations-Vermittlungsanlagen mit Vermittlungsplätzen.

(57) 2.1 Bei einer Kommunikations-Vermittlungsanlage mit Vermittlungsplätzen, wobei Wartespeicher vorgesehen sind für die Aufnahme von Anrufen, welche nicht sofort von den Vermittlungsplätzen bearbeitet werden können, soll eine zusätzliche Beantwortungsmöglichkeit geschaffen werden, damit auch dann noch Anrufe angenommen werden können, wenn die Wartespeicher keine Anrufe mehr aufnehmen können.

2.2 Es ist eine Umsteuereinrichtung vorgesehen, welche beim Erreichen eines vorbestimmten Füllstandes eines Wartespeichers anspricht und die Anrufe zu einer Anrufbeantwortungseinrichtung umleitet. Dort befindet sich eine Ansageeinrichtung und Sprachspeicher, worin von Anrufern eingegebene Mitteilungen gespeichert werden können. Ein zusätzlicher Identifizierungsspeicher ist der Anrufbeantwortungseinrichtung zugeordnet, worin Daten über angekommene Verbindungen abgelegt werden können. Diese dienen zur gezielten Abfrage des Sprachspeichers und werden ausgelesen, damit sie am Vermittlungsplatz angezeigt werden können.

2.3 Wenn bei Kommunikations-Vermittlungsanlagen, insbesondere Fernsprechnebenstellenanlagen und Makler-Vielfachanlagen eine große Menge von Anrufen abgefertigt werden müssen, so bietet das Verfahren den Vorteil, daß wenige Anrufe verloren gehen, weil rechtzeitig die Anrufbeantwortungseinrichtung in Tätigkeit tritt. Dadurch wird eine kurzfristige Entlastung der Vermittlungsplätze erreicht.

## Verfahren zur Anrufbeantwortung in Kommunikations-Vermittlungsanlagen mit Vermittlungsplätzen

Die Erfindung betrifft ein Verfahren zur Anrufbeantwortung in Kommunikations-Vermittlungsanlagen mit Vermittlungsplätzen nach den Oberbegriff des Patentanspruches 1.

Es ist bekannt, daß mitunter mehr Anrufe bei der Abfragestelle einer Kommunikations-Vermittlungsanlage ankommen als sofort von den Bedienungspersonen an den Vermittlungsplätzen angenommen werden können. Damit möglichst wenige Anrufe infolge zu langer Wartezeit verloren gehen, werden Wartespeicher eingesetzt, damit die Anrufe auf jeweils frei werdende Vermittlungsplätze aufgeteilt werden können.

Ein Verfahren für zentral gesteuerte Fernmelde-, insbesondere Fernsprechvermittlungsanlagen mit mehreren Vermittlungsplätzen ist in der DE-PS 34 16 827 beschrieben, wobei vermittlungsplatz- und anrufartindividuelle Anrufspeicher vorgesehen sind. Dadurch wird erreicht, daß eine optimale Verteilung der Anrufe stattfindet, und daß durch ein Drängelsignal gemeldet wird, wenn bestimmte Anrufarten eine möglichst schnelle Bearbeitung verlangen. Es ist außerdem ein gemeinsamer Speicher vorgesehen, wo Anrufe aufgenommen werden, die in den Vermittlungsplätzen zugeordneten Speichern nicht mehr untergebracht werden können, wenn diese bereits voll sind. Bei einem derartigen Verfahren kann es trotzdem zu langen Wartezeiten kommen, wenn immer wieder mehr Anrufe ankommen als abgearbeitet werden können, so daß anrufende Teilnehmer auf die Verbindung verzichten und der Anruf verloren geht.

Es ist außerdem bekannt, an zentraler Stelle Anrufbeantworter einzusetzen, damit Anrufe auch dann beantwortet werden können, wenn eine persönliche Entgegennahme nicht möglich ist. Eine Schaltungsanordnung zur Steuerung eines für den Fernsprechauftragsdienst eingesetzten zentralen Anrufbeantworters ist aus der DE-PS 30 03 252 bekannt. Damit wird für auf Auftragsdienst geschaltete Teilnehmer ein zentral angeordneter Anrufbeantworter individuell zur Verfügung gestellt, so daß ohne Mithilfe von Personen der Fernsprechauftragsdienst durchgeführt werden kann. Bei der Schaltung eines Teilnehmers auf Auftragsdienst kann ein Anruf nur entweder automatisch beantwortet werden, so wie es in der genannten Patentschrift beschrieben ist, oder er wird durch eine Person an einem Auftragsdienstplatz entgegengenommen. Es gibt bei einem derartigen Verfahren keine Möglichkeit, eine Umschaltung in Abhängigkeit vom Verkehrsaufkommen vorzunehmen.

Die Aufgabe der Erfindung besteht darin, für Kommunikations-Vermittlungsanlagen mit Vermittlungsplätzen, insbesondere bei Makler-Vielfachanlagen ein Verfahren anzugeben, womit erreicht werden soll, daß auch dann keine Anrufe verloren gehen, wenn die vorhandenen Wartespeicher gefüllt sind und womit eine vorübergehende Entlastung des Bedienungspersonals bewirkt werden kann.

Diese Aufgabe wird mit einer Merkmalskombination gelöst, wie sie im Patentanspruch 1 angegeben ist.

Damit wird in vorteilhafter Weise erreicht, daß Anrufe automatisch beantwortet werden, wenn die Wartespeicher einen vorbestimmten Füllgrad erreicht haben, so daß keine größeren Wartezeiten entstehen und eine vorrübergehende Entlastung beim Abfragebetrieb gegeben ist.

In den Unteransprüchen sind vorteilhafte Weiterbildungen der Erfindung angegeben.

Ein Ausführungsbeispiel der Erfindung wird nachfolgend anhand einer Zeichnung näher erläutert. Es ist eine Kommunikations-Vermittlungsanlage KVA schematisch dargestellt, woran Vermittlungsplätze VP1 - VPn angeschlossen sind. Diese Vermittlungsplätze VP1 - VPn dienen dazu, ankommende Anrufe abzufragen, wenn die Rufnummern der übrigen an die Kommunikations-Vermittlungsanlage KVA angeschlossenen Teilnehmerstellen nicht bekannt sind. Dies trifft insbesondere für Fernsprechnebenstellenanlagen zu, die in vielfältigen Ausführungsformen betrieben werden. So ist es beispielsweise bei Makler-Vielfachanlagen üblich, die Endgeräte mit Funktionen von Vermittlungsplätzen VP auszustatten. Es ist in solchen Fällen eine große Menge ankommender Anrufe zu beantworten, oder es müssen viele abgehende Gespräche geführt werden.

Für die Bewältigung des ankommenden Fernsprechverkehrs, wobei es sich zumeist um Fernverbindungen handelt, sind Wartespeicher WSP vorgesehen. In diesem Wartespeicher werden Anrufe, beispielsweise von einer Teilnehmerstelle TA, welche an einer anderen Vermittlungsanlage angeschlossen ist, zunächst aufgenommen. Wenn der Wartespeicher WSP leer ist, so erscheint sofort ein Anrufsignal an einem der Vermittlungsplätze VP1 - VPn, welches einer rufenden Leitung zugeordnet sein kann oder in konzentrierter Abfrage betrie ben werden kann. Wenn schon weitere Anrufe vorliegen, so wird ein neu hinzukommender Anruf an die bereits bestehende Warteschlange angereiht. Die Wartespeicher WSP sind so konzipiert, daß zuerst ankommende Anrufe auch zuerst an die Vermittlungsplätze VP weitergegeben werden, wobei eine zyklische gleichmäßige Verteilung erfolgen kann. Der Wartespeicher ist in zwei Bereiche WSPI und WSPII unterteilt, wobei anrufende Verbindungen

2

welche in nächster Zeit an die Vermittlungsplätze VP weitergegeben werden sollen, mit einer Ansage beaufschlagt werden können. Dies geschieht dann, wenn ein Anruf, der zunächst in den ersten Speicherbereich WSPI gelangt war, in den zweiten Speicherbereich WSPII übernommen wird.

Bei starkem ankommenden Fernsprechverkehr kann es vorkommen, daß die zur Verfügung stehenden Vermittlungsplätze VP1 - VPn nicht in der Lage sind, so zügig abzufertigen, daß keine nennenswerten Wartezeiten entstehen. Wenn also mehr Anrufe ankommen als jeweils abgefragt werden können, so werden die Speicherbereiche WSPI und WSPII des Wartespeichers WSP allmählich immer mehr gefüllt. Wenn dann immer noch freie Leitungen vorhanden sind, auf denen Anrufe ankommen können, so steht kein Speicherplatz mehr zur Verfügung, wenn der Wartespeicher WSP bereits überlastet ist. Dies hat zur Folge, daß ein solcher Anruf nicht einem der Vermittlungsplätze VP zugewiesen werden kann.

Deshalb ist eine Umsteuereinrichtung U vorgesehen, welche beim Erreichen eines vorbestimmten Füllstandes des Wartespeichers WSP anspricht und die Anrufe zu einer Anrufbeantwortungseinrichtung ABE weiterleitet. Dabei werden solche Anrufe zunächst automatisch beantwortet, und einem anrufenden Teilnehmer TA wird in einem Sprachspeicher SSP ein Bereich zur Verfügung gestellt, wo er Nachrichten hinterlassen kann. Zusätzlich ist noch ein Identifizierungsspeicher vorgesehen, worin Daten über angekommene Verbindungen, z. B. Leitungsnummer, Herkunftsort und An ruferdaten abgelegt werden können. Diese Daten werden dann dem Vermittlungsplatz angezeigt, welcher den Sprachspeicher abfragt. Wenn es notwendig ist, kann auch mehr als eine Ansageeinrichtung vorgesehen werden. Der Identifizierungsspeicher ISP und der Sprachspeicher kann einer jeden Ansageeinrichtung ANSE individuell zugeordnet sein. Es ist jedoch auch möglich,mehrere Ansageeinrichtungen ANSE vorzusehen, welche zu einem gemeinsamen Identifizierungsspeicher ISP und zu einem gemeinsamen Sprachspeicher SSP Zugang haben.

Da bei starkem Verkehrsaufkommen die bereits automatisch beantworteten Anrufe nicht kurzfristig beantwortet werden, wird beim Erreichen eines vorgegebenen Füllgrades des Identifizierungsspeichers ISP oder des Sprachspeichers SSP ein Signal erzeugt, welches an den Vermittlungsplätzen VP1 - VPn erscheint und zum Abarbeiten des Sprachspeichers SSP auffordert. Mit diesem Signal kann auch ein vorbestimmter Vermittlungsplatz, z. B. VPn aus der allgemeinen Anrufverteilung herausgenommen werden,damit er für die Abarbeitung der gespeicherten Anrufe frei wird. Bei der Abfrage von in der Anrufbeantwortungseinrichtung ABE gespeicherten Nachrichten kann so vorgegangen werden, daß zuerst angekommene Anrufe auch zuerst bearbeitet werden. Es· ist jedoch auch möglich, über den Identifizierungsspeicher ISP eine gezielte Ansteuerung vorzunehmen, wenn vermutet wird, daß besonders wichtige Nachrichten vorliegen. In diesem Fall wird vom Vermittlungsplatz, z. B. VPn ein besonderes Suchkriterium, beispielsweise Namen, Rufnummer, Ortsnetzkennzahl, Städtenamen usw. eingegeben, wonach der Identifizierungsspeicher ISP abgesucht wird. Wenn eine Übereinstimmung gefunden wird, so steht die zugehörige sprachliche Mitteilung zur Verfügung, so daß sie abgehört werden kann. Auf nähere Einzelheiten soll in diesem Zusammenhang nicht eingegangen werden, weil der Betrieb von Anrufbeantwortungseinrichtungen bekannt ist und die zum Abhören von gespeicherten Nachrichten notwendigen Prozeduren in ihren Einzelheiten nicht zum Gegenstand der vorliegenden Erfindung gehören.

Wenn ein Vermittlungsplatz, z. B. VPn zur Abfrage der Anrufbeantwortungseinrichtung ABE mit dem Sprachspeicher SSP verbunden ist, so kann durch eine nicht dargestellte Logikanordnung bewirkt werden, daß dieser Vermittlungsplatz VPn nicht eher wieder am regulären Abfragebetrieb teilnehmen kann, bis alle im Identifizierungsspeicher ISP und im Sprachspeicher SSP befindlichen Informationen abgearbeitet und gelöscht worden sind. Mit Hilfe der Anrufbeantwortungseinrichtung können kurzzeitig auftretende Spitzenbelastungen im ankommenden Fernsprechverkehr so abgefangen werden, daß nur ein geringer Verlust auftritt. Die Abfrage der Anrufbeantwortungseinrichtung ABE befindlichen Speicher kann jederzeit unabhängig von deren Füllstand erfolgen.

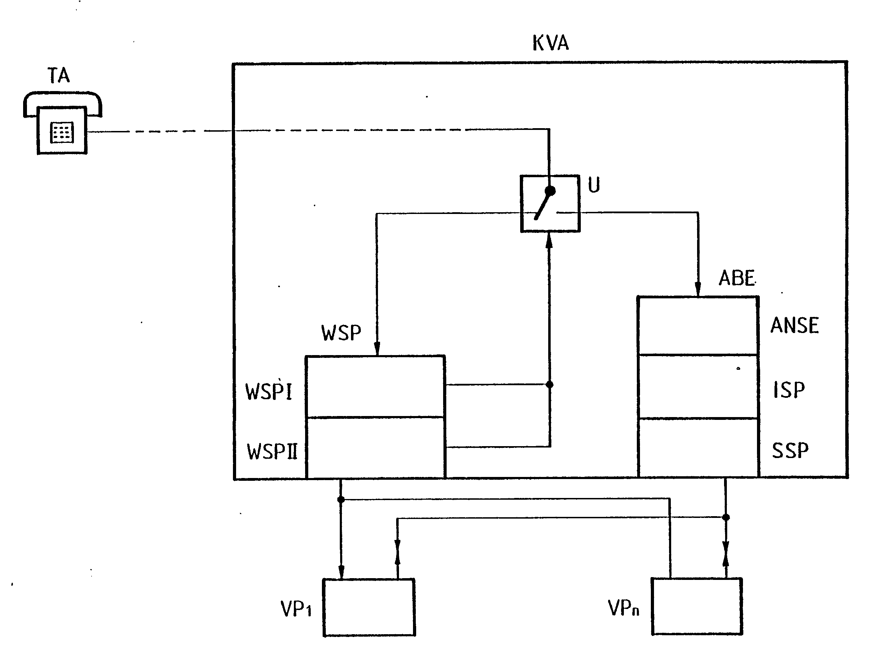

## Ansprüche

1. Verfahren zur Anrufbeantwortung in Kommunikations-Vermittlungsanlagen mit Vermittlungsplätzen, wobei Wartespeicher vorgesehen sind für die Aufnahme von Anrufen, die nicht sofort von den Vermittlungsplätzen aus bearbeitet werden können und dann zu einem Anrufsignal führen, wenn eine Abfrage möglich ist,
dadurch gekennzeichnet,
daß eine Umsteuereinrichtung (U) vorgesehen ist, welche beim Erreichen eines vorbestimmten Füllstandes eines Wartespeichers (WSP) anspricht und Anrufe zu einer Anrufbeantwortungseinrichtung (ABE) umleitet, welche eine Ansageeinrichtung (ANSE) und Sprachspeicher (SSP) enthält, worin von Anrufern (TA) eingegebene Mitteilungen gespeichert werden können, daß ein zusätzlicher Identifizierungsspeicher (ISP) der Anrufbeantwortungseinrichtung (ABE) zugeordnet ist, worin Daten über angekommene Verbindungen (z. B. Leitungsnummer, Herkunftsort, Anruferdaten usw.) abgelegt werden können, welche bei der Abfrage des Sprachspeichers (SSP) ausgelesen und an dem betreffenden Vermittlungsplatz (VP1 - VPn) angezeigt werden, und daß bei einem vorgegebenen Füllstand des Sprachspeichers (SSP) ein besonderes Aufmerksamkeitssignal an den Vermittlungsplätzen (VP1 - VPn) erscheint, welches zur Abfrage des Sprachspeichers (SSP) auffordert.

2. Verfahren nach Anspruch 1,
dadurch gekennzeichnet,
daß der Wartespeicher (WSP) unterteilt ist, wobei ankommende Verbindungen zunächst in einen ersten Teil (WSPI) gelangen, und ohne Ansage der Rufzustand beibehalten wird, daß die Verbindungen anschließend in einen zweiten Teil (WSPII) des Wartespeichers (WSP) überführt werden, wobei eine Ansage, z. B. "bitte warten", erfolgt, und daß beim Ansprechverhalten der Umsteuereinrichtung (U) der Füllstand beider Teile des Wartespeichers (WSP) berücksichtigt wird.

3. Verfahren nach Anspruch 1,
dadurch gekennzeichnet,
daß bei der allgemeinen Abarbeitung von im Sprachspeicher (SSP) abgelegten Informationen zuerst eingespeicherte auch zuerst eingelesen werden.

4. Verfahren nach Anspruch 1,
dadurch gekennzeichnet,
daß die im Sprachspeicher (SSP) befindlichen Informationen auch gezielt, z. B. selektiert nach Leitungsnummer, Herkunftsort oder Anruferkennzeichnung, ansteuerbar sind.

KVA

TA

U

WSP

WSPI

WSPII

ABE

ANSE

ISP

SSP

VP₁

VPn

EP 0 384 025 A2